# FASCICULE DE BREVET EUROPEEN

(11) **EP 1 473 936 B1**
(45) Date de publication et mention de la délivrance du brevet: **11.01.2012**
(21) Numéro de dépôt: 04291096.8
(22) Date de dépôt: 28.04.2004
(51) Int. Cl.: H04N 7/10

(54) **Système de distribution de signaux de télévision et procédé le mettant en oeuvre**
Fernsehsignalenverteilungssystem und -Verfahren
Television signal distribution system and method

(30) Priorité: 30.04.2003 FR 0305335
(43) Date de publication de la demande: 03.11.2004
(73) Titulaire: Legrand France, 87000 Limoges (FR)
(72) Inventeur: Laroche, Vincent, 38160 Saint-Marcellin (FR)
(74) Mandataire: Santarelli

(56) Documents cités:
- WO-A-97/01931
- WO-A-99/67880
- US-A- 5 305 350
- US-A1- 2003 046 706
- US-B1- 6 567 988

## Description

L'invention a trait à la distribution des signaux de télévision.

On sait que ces signaux sont traditionnellement véhiculés par des câbles coaxiaux, et donc sous forme asymétrique, mais que dans certaines circonstances il est intéressant de pouvoir distribuer de tels signaux sur une paire de conducteurs torsadée, c'est-à-dire sous forme symétrique, en particulier lorsqu'une telle paire de conducteurs est disponible dans un câble servant par ailleurs à la distribution des signaux de téléphonie ou des signaux de réseau informatique local (en anglais : Local Area Network).

La demande internationale WO 97/01931 décrit un système de distribution de signaux larges bandes permettant par exemple de distribuer un signal de télévision (véhiculé par un câble coaxial ou une fibre optique) ou un signal vidéo provenant d'une source interne sur plusieurs bornes de connexion adaptées à recevoir des paires de conducteurs torsadées. Ce système comporte une ou plusieurs unités de distribution en cascade distribuant un signal provenant d'un ou plusieurs ports d'entrée vers plusieurs ports de sortie. Pour permettre de s'affranchir des différentes longueurs des paires de conducteurs torsadées reliant les prises terminales à une telle unité de distribution, il est décrit un moyen d'accommodation des différentes atténuations en fonction des différentes longueurs de paires de conducteurs torsadées. Les prises les plus éloignées n'insèrent qu'un adaptateur d'impédance (balun) entre une paire de conducteurs torsadée et un câble coaxial de liaison à une télévision ou à un modulateur lui-même relié à une source de signal vidéo interne. Pour les prises les plus proches, il est en outre inséré un simulateur de câble entre la sortie de l'adaptateur d'impédance et le câble coaxial de liaison avec la télévision ou la source interne de signal vidéo. L'amplification du signal par l'unité de distribution est réglée en fonction de la paire de conducteurs torsadée de plus grande longueur. Pour les paires de conducteurs torsadées de plus faible longueur, les simulateurs de câbles compensent l'atténuation manquante correspondant à la différence de longueur entre les paires de conducteurs torsadées reliant les prises les plus éloignées à l'unité de distribution et les paires de conducteurs torsadées reliant les prises les plus proches à l'unité de distribution. Ces simulateurs sont insérés ou non à l'aide de commutateurs.

L'invention vise à permettre d'effectuer une telle distribution avec une paire de conducteurs torsadée dont la longueur peut varier dans une large plage.

Elle propose à cet effet un système de distribution de signaux de télévision, comportant une première borne de connexion, adaptée à recevoir un câble coaxial de distribution de signaux de télévision, et au moins une deuxième borne de connexion, adaptée à recevoir une paire de conducteurs torsadée, caractérisé en ce qu'il comporte un ensemble d'amplification muni d'un organe de sélection entre une première pente et une deuxième pente de croissance, en fonction de la fréquence, du gain entre le signal présent sur ladite première borne et le signal présent sur ladite deuxième borne.

La possibilité de sélectionner l'une ou l'autre pente d'amplification permet d'ajuster au mieux le traitement effectué dans l'ensemble d'amplification à la longueur de la paire de conducteurs torsadée, et permet en conséquence de distribuer les signaux de télévision sur une longueur plus importante que les limites classiquement admises aujourd'hui, qui sont de l'ordre de 30 m.

Selon des caractéristiques préférées pour des questions de simplicité, de commodité et d'économie de mise en oeuvre, ledit ensemble d'amplification comporte un amplificateur linéaire dont une entrée est reliée à ladite première borne, un atténuateur à pente positive dont une entrée est reliée à la sortie dudit amplificateur, et un conformateur de signal ayant une entrée reliée à la sortie dudit atténuateur à pente positive et une sortie reliée à ladite deuxième borne, avec ledit conformateur qui est adapté à insérer sélectivement un atténuateur à pente négative entre sa dite entrée et sa dite sortie.

De préférence, pour les mêmes raisons :
- ledit conformateur comporte :
- un premier inverseur, présentant une première borne, une deuxième borne et une troisième borne, admettant une première position où il relie ladite première borne à ladite troisième borne tandis qu'il isole l'une de l'autre ladite première borne et ladite deuxième borne, et admettant une deuxième position où il relie ladite première borne à ladite deuxième borne tandis qu'il isole l'une de l'autre ladite première borne et ladite troisième borne, avec la troisième borne qui est reliée audit atténuateur à pente positive ;
- un deuxième inverseur, présentant une première borne, une deuxième borne et une troisième borne, admettant une première position où il relie la première borne et la deuxième borne tandis qu'il isole la première borne et la troisième borne, et admettant une deuxième position où il relie la première borne et la troisième borne tandis qu'il isole l'une de l'autre la première borne et la deuxième borne, avec la deuxième borne du deuxième inverseur qui est reliée audit atténuateur à pente négative et avec ladite troisième borne du deuxième inverseur qui est reliée à la deuxième borne du premier inverseur ; et
- un organe de pilotage dudit premier inverseur et dudit deuxième inverseur, adapté à mettre le premier inverseur et le deuxième inverseur sélectivement chacun dans sa première position et chacun dans sa deuxième position ; et éventuellement
- ledit organe est également adapté à faire prendre audit premier inverseur et audit deuxième inverseur respectivement l'une desdites première et deuxième positions et l'autre desdites première et deuxième positions ; et/ou
- ledit organe de configuration comporte un bouton de commande manuelle.

De préférence encore, pour les mêmes raisons :
- ledit atténuateur à pente positive présente un gain dont l'écart entre sa valeur à 47 MHz et sa valeur à 862 MHz est compris entre 21 et 23 dB ; et éventuellement
- ledit atténuateur à pente négative dudit conformateur présente un gain dont l'écart entre sa valeur à 47 MHz et sa valeur à 862 MHz est compris entre 13 et 15 dB ; et/ou
- le gain dudit amplificateur linéaire est compris entre 17,4 et 19,4 dB.

De préférence encore, pour les même raisons, lorsque l'invention doit être mise en oeuvre pour distribuer les signaux de télévision présents sur le câble coaxial sur plusieurs paires de conducteurs torsadées :
- le système selon l'invention comporte plusieurs deuxièmes bornes de connexion avec ledit ensemble d'amplification qui est muni d'un dit conformateur de signal pour chaque dite deuxième borne ; et éventuellement
- le système selon l'invention comporte un répartiteur présentant une entrée reliée à la sortie dudit atténuateur à pente positive et présentant des sorties reliées chacune à un dit conformateur de signal respectif.

Selon d'autres caractéristiques préférées, pour les même raisons :
- ledit système comporte plusieurs deuxièmes bornes de connexion avec ledit ensemble d'amplification qui est muni d'un dit organe de sélection pour chaque dite deuxième borne ; et/ou
- ledit conformateur comporte un convertisseur de signal asymétrique en signal symétrique.

L'invention vise également, sous un deuxième aspect, un procédé distribution de signaux de télévision, caractérisé en ce qu'il comporte l'étape de se procurer un système tel qu'exposé ci-dessus, l'étape de déterminer un seuil de longueur de ladite paire de conducteurs torsadée, et l'étape de sélectionner ladite première pente lorsque la paire torsadée a une longueur inférieure audit seuil et ladite deuxième pente lorsque la paire torsadée a une longueur supérieure audit seuil.

De préférence, compte tenu des caractéristiques physiques des paires de conducteurs torsadées conventionnelles, ledit seuil est compris entre 27 et 29 m.

L'exposé de l'invention sera maintenant poursuivi par la description d'un exemple de réalisation, donnée ci-après à titre illustratif et non limitatif en référence aux dessins annexés. Sur ceux-ci :
- la figure 1 est une représentation schématique d'une installation de distribution de signaux de télévision comportant une système conforme à l'invention ;
- la figure 2 est une représentation schématique donnant le détail de l'un des conformateurs de signal que comporte ce système entre un répartiteur et une borne de connexion à une paire de conducteurs torsadée ;
- la figure 3 est un graphe illustrant l'affaiblissement des signaux de télévision terrestre lors de leur propagation dans une paire de conducteurs torsadée, ce graphe portant en abscisses les fréquences, exprimées en MHz, portant en ordonnée le gain, exprimé en dB, et donnant une série de courbes pour différentes longueurs de paires de conducteurs torsadées ; et
- la figure 4 est un graphe similaire, mais pour la propagation dans l'ensemble de l'installation illustrée sur la figure 1, avec l'axe des ordonnées qui est dilaté par rapport à celui de la figure 3.

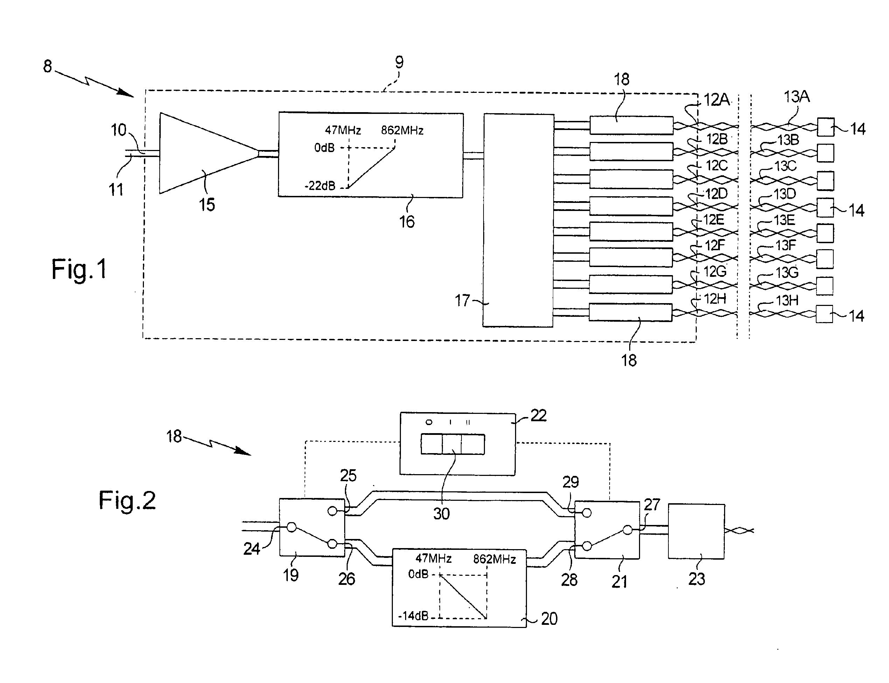

L'installation 8 illustrée schématiquement sur la figure 1 comporte un système 9 muni d'une borne de connexion 10 à laquelle aboutit un câble coaxial 11 et muni de huit bornes de connexion 12A à 12H à chacune desquelles aboutit une respective de huit paires de conducteurs torsadées 13A à 13H, lesquelles sont raccordées chacune, à l'extrémité opposée au système 9, à une prise 14.

Le système 9 est ici disposé dans une gaine technique du bâtiment résidentiel ou tertiaire auquel appartient l'installation 8.

Le câble 11 est relié à une antenne de réception ou à un réseau câblé de distribution de signaux de télévision terrestre.

Les paires de conducteurs torsadées 13A à 13H font ici chacune partie d'un câble conventionnel de réseau informatique local. Chacun de ces câbles comporte, en outre de l'une des paires 13A à 13H, trois autres paires de conducteurs torsadées véhiculant des signaux d'une autre nature, en l'occurrence des signaux de réseau informatique local et des signaux de téléphonie. Ces câbles cheminent dans le bâtiment susmentionné entre le système 9, qui fait partie d'un ensemble plus complet de distribution de signaux, et l'une des prises 14.

Chacune des prises 14 est ici du type RJ 45, en catégorie 6. Chacune des paires 13A à 13H est reliée, sur la prise 14 correspondante, à la paire de contacts classiquement appelée "7" et "8".

Pour relier un appareil de télévision à l'une des prises 14, on utilise un adaptateur branché sur cette prise 14 et un câble coaxial branché entre l'adaptateur et l'appareil de télévision. Dans une variante préférée, le câble coaxial et l'adaptateur sont réunis dans un même cordon.

Cet adaptateur sert à convertir le signal symétrique présent sur la paire de conducteurs torsadée en un signal asymétrique véhiculable sur un câble coaxial.

Le système 9 comporte un amplificateur linéaire 15, un atténuateur 16 à pente positive, un répartiteur 17 à huit voies et huit conformateurs de signal 18.

L'entrée de l'amplificateur 15 est reliée à la borne 10.

La sortie de l'amplificateur 15 est reliée à l'entrée de l'atténuateur 16.

La sortie de l'atténuateur 16 est reliée à l'entrée du répartiteur 17.

Chacune des huit sorties du répartiteur 17 est reliée à l'entrée de l'un des conformateurs 18.

La sortie de chaque conformateur 18 est reliée à l'une des bornes 12A à 12H.

Entre le câble 11 et l'entrée de chacun des conformateurs 18, le signal de télévision conserve sa forme asymétrique conventionnelle.

Les conformateurs 18 sont identiques. On va maintenant en décrire l'un d'eux plus en détail à l'appui de la figure 2.

Le conformateur 18 comporte un inverseur 19, un atténuateur 20 à pente négative, un inverseur 21, un commutateur 22 de commande des inverseurs 19 et 21 et un convertisseur 23 de signal asymétrique en signal symétrique.

L'inverseur 19 présente trois bornes, respectivement 24, 25 et 26. Dans la position illustrée sur la figure 2, l'inverseur 19 relie les bornes 24 et 26 tandis qu'il isole l'une de l'autre les bornes 24 et 25. L'inverseur 19 admet une autre position ou il relie les bornes 24 et 25 tandis qu'il isole l'une de l'autre les bornes 24 et 26.

L'inverseur 21 présente trois bornes 27, 28 et 29.

Dans la position illustrée sur la figure 2, l'inverseur 21 relie les bornes 27 et 28 tandis qu'il isole l'une de l'autre les bornes 27 et 29. Dans son autre position, l'inverseur 21 relie les bornes 27 et 29 tandis qu'il isole l'une de l'autre les bornes 27 et 28.

La borne 25 de l'inverseur 19 et la borne 29 de l'inverseur 21 sont reliées l'une à l'autre.

La borne 26 est reliée à l'entrée de l'atténuateur 20.

La borne 28 est reliée à la sortie de l'atténuateur 20.

La borne 27 est reliée à l'entrée du convertisseur 23.

Le commutateur 22 présente un curseur 30 à trois positions, repérées respectivement par 0, I et II.

Dans la position I, les inverseurs 19 et 21 sont commandés pour adopter chacun la position illustrée sur la figure 2.

Dans la position II, les inverseurs 19 et 21 sont commandés pour adopter chacun la position autre que celle illustrée sur la figure 2, à savoir que l'inverseur 19 relie les bornes 24 et 25 tandis qu'il isole l'une de l'autre les bornes 24 et 26 et que le commutateur 21 relie les bornes 27 et 29 tandis qu'il isole l'une de l'autre les bornes 27 et 28.

Dans la position 0, les inverseurs 19 et 21 sont commandés pour que l'un d'eux adopte la position autre que celle illustrée sur la figure 2 et pour que l'autre garde cette position, par exemple pour que l'inverseur 19 relie les bornes 24 et 25 tandis qu'il isole les bornes 24 et 26 l'une de l'autre alors que l'inverseur 21 garde la position illustrée sur la figure 2.

On voit que quand le curseur 30 du commutateur 22 est dans la position 0, il n'y a pas de liaison entre les bornes 24 et 27, et plus généralement pas de liaison entre la borne 10 et celle des bornes 12A à 12H à laquelle est reliée le conformateur 18.

Dans la position I du curseur 30, le conformateur 18 est dans la position illustrée sur la figure 2, où le signal présent à l'entrée de l'unité 18 passe au travers de l'atténuateur 20 puis du convertisseur 23.

Dans la position II, il y a une liaison directe entre les bornes 24 et 27. Le signal en sortie du conformateur 18 est alors directement celui présent sur son entrée et transformé par le convertisseur 23.

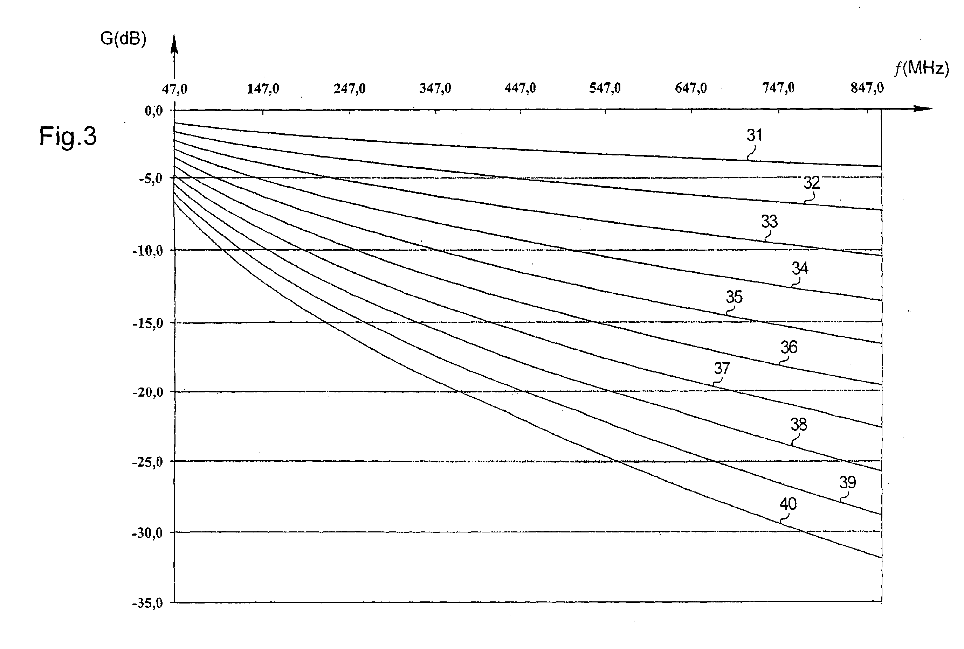

Le graphe qui forme la figure 3 illustre l'affaiblissement d'un signal de télévision terrestre lors de sa propagation dans l'une des paires 13A à 13H, suivant les fréquences.

Les courbes 31 à 40 correspondent à une longueur respectivement de 5, 10, 15, 20, 25, 30, 35, 40, 45 et 50 mètres pour la longueur de la paire torsadée en question.

On voit que, pour un câble de 5 m (courbe 31), l'affaiblissement est de 0,9 dB à 47 MHz et de 4,2 dB à 862 MHz tandis que pour un câble de 50 m de longueur (courbe 40), l'affaiblissement est de 6,7 dB à 47 MHz et de 31,9 dB à 862 MHz.

L'écart entre l'affaiblissement à 47 MHz et l'affaiblissement à 862 MHz est ainsi de 3,3 dB pour une longueur de 5 m et de 25,2 dB pour une longueur de 50 m.

Pour faire face à cette dispersion relativement importante de l'affaiblissement suivant la longueur des paires torsadées, le système 9 est configurable pour chacune des paires 13A à 13H afin que l'amplification à effectuer entre le câble 11 et la paire torsadée dont il s'agit puisse s'effectuer suivant un gain croissant en fonction de la fréquence sélectivement avec l'une de deux pentes distinctes, suivant que la longueur de la paire dont il s'agit est inférieure ou supérieure à un seuil prédéterminé.

Ici, lorsque celle des paires 13A à 13H dont il s'agit a une longueur inférieure à 28 m, le curseur 30 du commutateur 22 est placé sur la position I tandis que si la longueur de cette paire est supérieure à 28 m, le curseur 30 est placé sur la position II.

Dans ce dernier cas (longueur supérieure à 28 m), l'amplificateur linéaire 15 est suivi du seul atténuateur 16.

Le gain procuré par le système 9, qui augmente au fur et à mesure qu'augmente la fréquence, résulte donc de l'amplificateur 15 et du seul atténuateur 16.

Dans l'exemple illustré, l'amplificateur 15, qui est linéaire en ce sens qu'il procure le même gain sur l'ensemble de la bande de fréquence des signaux de télévision terrestre (de 5 à 862 MHz), a un gain de 18,4 dB tandis que, comme illustré très schématiquement sur la figure 1, la pente de l'atténuateur 16 est telle qu'il se produit un affaiblissement de 22 dB à 47 MHz et aucun affaiblissement à 862 MHz.

L'ensemble formé par l'amplificateur 15 et par l'atténuateur 16 procure ainsi un gain croissant régulièrement de -3,6 dB à 47 MHz à +18,4 dB à 862 MHz.

Comme illustré très schématiquement sur la figure 2, l'affaiblissement procuré par l'atténuateur 20 est nul à 47 MHz et croît progressivement jusqu'à la valeur de 14 dB à la fréquence de 862 MHz.

Le gain global procuré par l'amplificateur 15, par l'atténuateur 16 et par l'atténuateur 20, soit le gain global du système 9 entre son entrée et l'une des paires torsadées 13A à 13H lorsque le curseur 30 de l'unité 18 est dans la position I, est donc de -3,6 dB à 47 MHz et de +4,4 dB à 862 MHz.

On voit que dans les deux cas, le gain global augmente avec la fréquence, avec une amplitude de 22 dB entre ses valeurs respectivement à 47 MHz et à 862 MHz quand le curseur 30 est dans la position II et avec une amplitude de 8 dB entre ses valeurs à 47 MHz et à 862 MHz quand le curseur 30 est dans la position I.

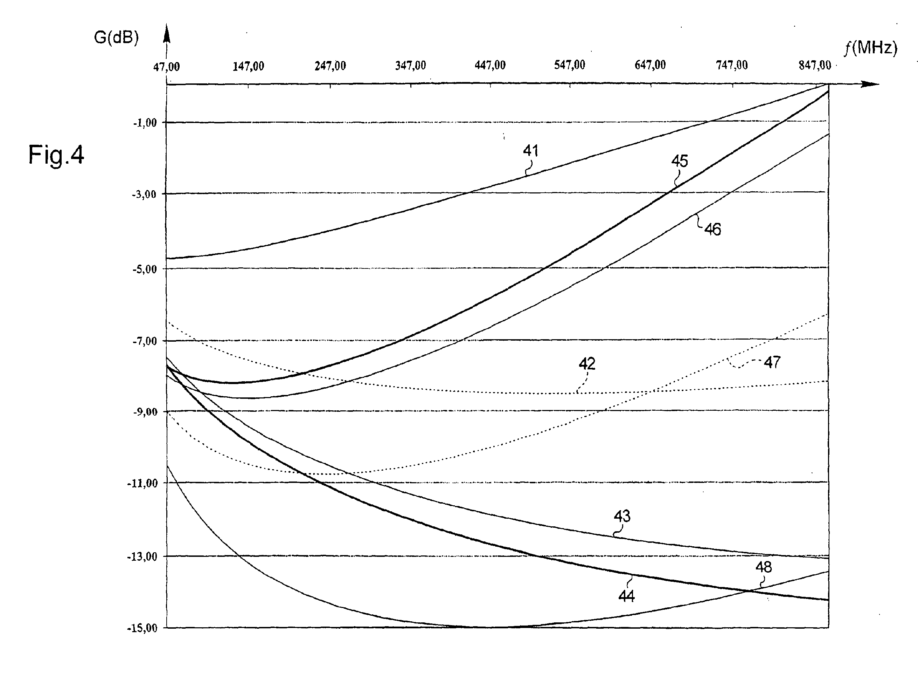

Sur le graphe qui forme la figure 4, les courbes 41 à 44 correspondent à une longueur de paire torsadée respectivement de 5 m, de 18 m, de 26 m et 27,9 m.

Ces longueurs sont toutes inférieures au seuil de 28 m, le curseur 30 est donc dans la position I.

Les courbes 45 à 48 correspondent quant à elles à une longueur respectivement de 28,1 m, de 30 m, de 38 m et de 50 m. Chacune de ces longueurs étant supérieure au seuil de 28 m, le curseur 30 est dans la position II.

On voit que la dispersion d'affaiblissement suivant la longueur de paires torsadées est particulièrement réduite et que, pour une longueur donnée, l'écart maximum d'affaiblissement est de 8 dB (courbe 45), ce qui est en conformité avec la dynamique admise pour les signaux de télévision, en particulier par la norme EN 50083-7, qui limite cette dynamique à 20 dB.

Les différentes valeurs numériques données ci-dessus correspondent à l'exemple illustré et sont bien entendu susceptibles de varier suivant les conditions de mise en oeuvre.

A cet égard, à ce jour, les valeurs préférées de mise en oeuvre sont les suivante :
- pour l'atténuateur 16, un gain dont l'écart entre sa valeur à 47 MHz et sa valeur à 862 MHz est compris entre 21 et 23 dB ;
- pour l'atténuateur 20, un gain dont l'écart entre sa valeur à 47 MHz et sa valeur à 862 MHz est compris entre 13 et 15 dB ;
- pour l'amplificateur linéaire 15, un gain compris entre 17,4 et 19,4 dB ; et
- pour la longueur des paires torsadées, un seuil compris entre 27 et 29 m, et plus précisément l'emploi de la pente à petite amplitude pour des longueurs comprises entre 5 m et ce seuil et l'emploi de la pente à grande amplitude pour des longueurs comprises entre le seuil et 50 m.

On notera encore que la valeur de 862 MHz mentionnée ci-dessus ne doit pas être considérée comme une limite supérieure au-delà de laquelle la transmission des signaux de télévision n'est plus possible, et qu'au contraire une telle transmission est possible, si on le désire, par exemple jusqu'à 900 ou 950 MHz voire au-delà.

Il va de soi que le conformateur 18, s'il constitue un ensemble fonctionnel, ne constitue pas nécessairement un élément matériel monobloc, et de même pour le système 9.

A ce jour, dans un mode de réalisation préféré, l'amplificateur 15, l'atténuateur 16, le répartiteur 17 et la portion de chaque conformateur 18 située entre les bornes 24 et 27 sont réunis dans une unité électronique active, tandis que le convertisseur 23 et les bornes 10 ainsi que 12A à 12H font partie d'un concentrateur de câblage muni d'un connecteur pour recevoir cette unité électronique active.

Dans une variante non illustrée, le commutateur 22 à curseur manuel 30 est remplacé par un organe de configuration automatisé comportant des moyens de mesure de la longueur de la paire torsadée, par exemple par résistivité ou par réflexion d'une onde, et un commutateur piloté par cet organe de mesure pour prendre automatique la position I ou la position II suivant que le résultat de la mesure de longueur du lien est inférieur ou supérieur au seuil.

Dans une autre variante non illustrée, l'amplificateur 15 et l'atténuateur 16 communs à chacune des paires 13A à 13H et l'atténuateur 20 propre à l'une des paires en question, sont remplacés par des ensembles individuels d'amplification à pentes sélectionnables chacun disposé dans l'un des conformateurs 18.

Dans d'autres variantes non illustrées, chaque ensemble d'amplification propre à l'une des paires torsadées comporte davantage que deux pentes de croissance, en fonction de la fréquence, du gain entre le signal présent sur la borne telle que 10 et le signal présent sur la borne telle que 12A à 12H dont il s'agit, afin par exemple de pouvoir diffuser les signaux de télévision sur une paire torsadée ayant une longueur plus grande que le seuil de 50m ; et/ou chaque paire torsadée présente des caractéristiques d'affaiblissement des signaux de télévision différentes de celles illustrées sur la figure 3, en particulier des performances améliorées correspondant à des courbes similaires aux courbes 31 à 40 mais avec l'axe des abscisses qui est contracté, c'est-à-dire avec les valeurs numériques apparaissant sur la figure 3 qui sont remplacées par de plus grandes valeurs numériques.

A ce dernier propos, on observera que si la contraction de l'axe des abscisses est telle que la valeur de 862 MHz est remplacée par une valeurs de l'ordre de 2150 MHz, la variante de l'installation telle que 8 convient non seulement à la distribution des signaux de télévision terrestre, mais aussi à la distribution des signaux de télévision par satellite.

Dans d'autres variantes non illustrées, il y a davantage ou alors moins de paires torsadées que huit, par exemple une seule, auquel cas il n'y a pas de répartiteur tel que 17.

De nombreuses autres variantes sont possibles en fonction des circonstances, et on rappelle à cet égard que l'invention ne se limite pas aux exemples décrits et représentés, mais à l'objet des revendications.

## Revendications

1. Système de distribution de signaux de télévision, comportant une première borne de connexion (10), adaptée à recevoir un câble coaxial (11) de distribution de signaux de télévision, et au moins une deuxième borne de connexion (12A-12H), adaptée à recevoir une paire (13A-13H) de conducteurs torsadée, **caractérisé en ce qu'**il comporte un ensemble d'amplification (15, 16, 18) muni d'un organe (22) de sélection entre une première pente et une deuxième pente de croissance, en fonction de la fréquence, du gain entre le signal présent sur ladite première borne (10) et le signal présent sur ladite deuxième borne (12A-12H).

2. Système selon la revendication 1, **caractérisé en ce que** ledit ensemble d'amplification comporte un amplificateur linéaire (15) dont une entrée est reliée à ladite première borne (10), un atténuateur à pente positive (16) dont une entrée est reliée à la sortie dudit amplificateur (15), et un conformateur de signal (18) ayant une entrée reliée à la sortie dudit atténuateur à pente positive (16) et une sortie reliée à ladite deuxième borne (12A-12H), avec ledit conformateur (18) qui est adapté à insérer sélectivement un atténuateur (20) à pente négative entre sa dite entrée et sa dite sortie.

3. Système selon la revendication 2, **caractérisé en ce que** ledit conformateur (18) comporte :
- un premier inverseur (19), présentant une première borne (24), une deuxième borne (25) et une troisième borne (26), admettant une première position où il relie ladite première borne (24) à ladite troisième borne (26) tandis qu'il isole l'une de l'autre ladite première borne (24) et ladite deuxième borne (25), et admettant une deuxième position où il relie ladite première borne (24) à ladite deuxième borne (25) tandis qu'il isole l'une de l'autre ladite première borne (24) et ladite troisième borne (26), avec la troisième borne (26) qui est reliée audit atténuateur à pente positive (20) ;
- un deuxième inverseur (21), présentant une première borne (27), une deuxième borne (28) et une troisième borne (29), admettant une première position où il relie la première borne (27) et la deuxième borne (28) tandis qu'il isole la première borne (27) et la troisième borne (29), et admettant une deuxième position où il relie la première borne (27) et la troisième borne (29) tandis qu'il isole l'une de l'autre la première borne (27) et la deuxième borne (28), avec la deuxième borne (28) du deuxième inverseur (21) qui est reliée audit atténuateur à pente négative (20) et avec ladite troisième borne (29) du deuxième inverseur (21) qui est reliée à la deuxième borne (25) du premier inverseur (19) ; et
- un organe (22) de pilotage dudit premier inverseur (19) et dudit deuxième inverseur (21), adapté à mettre le premier inverseur et le deuxième inverseur sélectivement chacun dans sa première position et chacun dans sa deuxième position.

4. Système selon la revendication 3, **caractérisé en ce que** ledit organe (22) est également adapté à faire prendre audit premier inverseur (19) et audit deuxième inverseur (21) respectivement l'une desdites première et deuxième positions et l'autre desdites première et deuxième positions.

5. Système selon l'une quelconque des revendications 3 ou 4, **caractérisé en ce que** ledit organe de configuration (22) comporte un bouton (30) de commande manuelle.

6. Système selon l'une quelconque des revendications 2 à 5, **caractérisé en ce que** ledit atténuateur (16) à pente positive présente un gain dont l'écart entre sa valeur à 47 MHz et sa valeur à 862 MHz est compris entre 21 et 23 dB.

7. Système selon la revendication 6, **caractérisé en ce que** ledit atténuateur à pente négative (20) dudit conformateur (18) présente un gain dont l'écart entre sa valeur à 47 MHz et sa valeur à 862 MHz est compris entre 13 et 15 dB.

8. Système selon l'une quelconque des revendications 6 ou 7, **caractérisé en ce que** le gain dudit amplificateur linéaire (15) est compris entre 17,4 et 19,4 dB.

9. Système selon l'une quelconque des revendications 2 à 8, **caractérisé en ce qu'**il comporte plusieurs deuxièmes bornes de connexion (12A-12H) avec ledit ensemble d'amplification (15, 16, 18) qui est muni d'un dit conformateur de signal (18) pour chaque dite deuxième borne (12A-12H).

10. Système selon la revendication 9, **caractérisé en ce qu'**il comporte un répartiteur (17) présentant une entrée reliée à la sortie dudit atténuateur à pente positive (16) et présentant des sorties reliées chacune à un dit conformateur de signal respectif (18).

11. Système selon l'une quelconque des revendications 1 à 10, **caractérisé en ce qu'**il comporte plusieurs deuxièmes bornes de connexion (12A-12H) avec ledit ensemble d'amplification (15, 16, 18) qui est muni d'un dit organe de sélection (22) pour chaque dite deuxième borne (12A-12H).

12. Système selon l'une quelconque des revendications 1 à 11, **caractérisé en ce que** chaque dit conformateur (18) comporte un convertisseur (23) de signal asymétrique en signal symétrique.

13. Procédé de distribution de signaux de télévision, **caractérisé en ce qu'**il comporte l'étape de se procurer un système selon l'une quelconque des revendications 1 à 12, l'étape de déterminer un seuil de longueur de ladite paire de conducteurs torsadée (13A-13H), et l'étape de sélectionner ladite première pente lorsque la paire torsadée (13A-13H) a une longueur inférieure audit seuil et ladite deuxième pente lorsque la paire torsadée (13A-13H) a une longueur supérieure audit seuil.

14. Procédé selon la revendication 13, **caractérisé en ce que** ledit seuil est compris entre 27 et 29 m.

15. Procédé selon l'une quelconque des revendications 13 ou 14, **caractérisé en ce que** ladite étape de sélectionner comporte la sélection de ladite première pente lorsque la paire torsadée (13A-13H) a une longueur comprise entre 5m et ledit seuil et comporte la sélection de ladite deuxième pente lorsque ladite paire torsadée (13A-13H) a une longueur comprise entre ledit seuil et 50m.

## Claims

1. A system for distributing television signals, comprising a first connection terminal (10) adapted to receive a television signal distribution coaxial cable (11), at least one second connection terminal (12A-12H) adapted to receive a twisted pair of conductors (13A-13H), **characterised in that** it comprises an amplifier assembly (15, 16, 18) comprising a unit (22) for selecting either a first slope or a second slope of gain increasing as a function of frequency between the signal present at said first terminal (10) and the signal present at said second terminal (12A-12H).

2. The system claimed in claim 1 **characterised in that** said amplifier assembly comprises a linear amplifier (15) having an input connected to said first terminal (10), a positive slope attenuator (16) having an input connected to the output of said amplifier (15), and a signal shaper (18) having an input connected to the output of said positive slope attenuator (16) and an output connected to said second terminal (12A-12H), which shaper (18) is adapted to insert selectively a negative slope attenuator (20) between its said input and its said output.

3. The system claimed in claim 2 **characterised in that** said shaper (18) comprises:
- a first switch (19), having a first terminal (24), a second terminal (25) and a third terminal (26), and adapted to assume a first position in which it connects said first terminal (24) to said third terminal (26) and isolates said first terminal (24) and said second terminal (25) from each other and to assume a second position in which it connects said first terminal (24) to said second terminal (25) and isolates said first terminal (24) and said third terminal (26) from each other, which third terminal (26) is connected to said positive slope attenuator (20);
- a second switch (21) having a first terminal (27), a second terminal (28) and a third terminal (29), and adapted to assume a first position in which it connects the first terminal (27) and the second terminal (28) and isolates the first terminal (27) and the third terminal (29) and to assume a second position in which it connects the first terminal (27) and the third terminal (29) and isolates the first terminal (27) and the second terminal (28) from each other, which second terminal (28) of the second switch (21) is connected to said negative slope attenuator (20) and which third terminal (29) of the second switch (21) is connected to the second terminal (25) of the first switch (19); and
- a unit (22) for controlling said first switch (19) and said second switch (21), adapted selectively to place the first and the second switch each in its first position and each in its second position.

4. The system claimed in claim 3, **characterised in that** said unit (22) is also adapted to place said first switch (19) and said second switch (21) in one of said first and second positions and in the other of said first and second positions respectively.

5. The system claimed in any one of claims 3 or 4, **characterised in that** said configuration unit (22) comprises a manual control button (30).

6. The system claimed in any one of claims 2 to 5, **characterised in that** said positive slope attenuator (16) has a difference between its gain at 47 MHz and at 862 MHz that is comprised between 21 and 23 dB.

7. The system claimed in claim 6 **characterised in that** said negative slope attenuator (20) of said shaper (18) has a difference between its gain at 47 MHz and at 862 MHz that is comprised between 13 and 15 dB.

8. The system claimed in any one of claims 6 or 7, **characterised in that** the gain of said linear amplifier (15) is comprised between 17.4 and 19.4 dB.

9. The system claimed in any one of claims 2 to 8, **characterised in that** it comprises a plurality of second connection terminals (12A-12H) with said amplifier assembly (15, 16, 18) comprising a said signal shaper (18) for each said second terminal (12A-12H).

10. The system claimed in claim 9, **characterised in that** it comprises a distributor (17) having an input that is connected to the output of said positive slope attenuator (16) and a plurality of outputs each of which is connected to a respective said signal shaper (18).

11. The system claimed any one of in claims 1 to 10, **characterised in that** it comprises a plurality of second connection terminals (12A-12H) with said amplifier assembly (15, 16, 18) comprising a said selecting units (22) for each said second terminal (12A-12H).

12. The system claimed in any one of claims 1 to 11, **characterised in that** each said shaper (18) comprises a converter (23) for converting unbalanced signals into balanced signals.

13. A method of distributing television signals **characterised in that** it comprises a step of obtaining a system as claimed in any one of claims 1 to 12, a step of determining a threshold for the length of said twisted pair of conductors (13A-13H), and a step of selecting said first slope when said twisted pair (13A-13H) has a length less than said threshold and said second slope when said twisted pair (13A-13H) has a length greater than said threshold.

14. The method claimed in claim 13 **characterised in that** said threshold is from 27 to 29 meters.

15. The method claimed in any one of claims 13 or 14, **characterised in that** said selection step comprises selecting said first slope when said twisted pair (13A-13H) has a length comprised between 5 meters and said threshold and selecting said second slope when said twisted pair (13A-13H)has a comprised between said threshold and 50 meters.

## Patentansprüche

1. System zur Verteilung von Fernsehsignalen mit einer ersten Anschlussklemme (10), die ein erstes Koaxialkabel (11) zur Verteilung von Fernsehsignalen aufzunehmen vermag, und wenigstens einer zweiten Anschlussklemme (12A-12H), die ein verdrilltes Adernpaar (13A-13H) aufzunehmen vermag,
**dadurch gekennzeichnet, dass** es eine Verstärkungseinheit (15, 16, 18) umfasst, die mit einem Mittel (22) zur Wahl zwischen einem ersten und einem zweiten frequenzabhängigen Verstärkungsverlauf zwischen dem an der ersten Klemme (10) vorhandenen Signal und dem an der zweiten Klemme (12A-12H) vorhandenen Signal versehen ist.

2. System nach Anspruch 1,
**dadurch gekennzeichnet, dass** die Verstärkungseinheit einen Linearverstärker (15), von dem ein Eingang mit der ersten Klemme (10) verbunden ist, ein Dämpfungsglied (16) mit positiv verlaufender Flanke, von dem ein Eingang mit dem Ausgang des Verstärkers (15) verbunden ist, und einen Signalformer (18) umfasst, der einen mit dem Ausgang des Dämpfungsglieds (16) mit positiv verlaufender Flanke verbundenen Eingang und einen mit der zweiten Klemme (12A-12H) verbundenen Ausgang besitzt, wobei der Signalformer (18) zwischen diesen Eingang und diesen Ausgang ein Dämpfungsglied (20) mit negativ verlaufender Flanke selektiv einzufügen vermag.

3. System nach Anspruch 2,
**dadurch gekennzeichnet, dass** der Signalformer (18) umfasst.
- einen ersten Inverter (19) mit einer ersten Klemme (24), einer zweiten Klemme (25) und einer dritten Klemme (26), der eine erste Stellung aufweist, in der er die erste Klemme (24) mit der dritten Klemme (26) verbindet, während er die erste Klemme (24) und die zweite Klemme (25) voneinander isoliert, und der eine zweite Stellung aufweist, in der er die erste Klemme (24) mit der zweiten Klemme (25) verbindet, während er die erste Klemme (24) und die dritte Klemme (26) voneinander isoliert, wobei die dritte Klemme (26) mit dem Dämpfungsglied (16) mit positiv verlaufender Flanke verbunden ist;
- einen zweiten Inverter (21) mit einer ersten Klemme (27), einer zweiten Klemme (28) und einer dritten Klemme (29), der eine erste Stellung aufweist, in der er die erste Klemme (27) mit der zweiten Klemme (28) verbindet, während er die erste Klemme (27) und die dritte Klemme (29) voneinander isoliert, und der eine zweite Stellung aufweist, in der er die erste Klemme (27) mit der dritten Klemme (29) verbindet, während er die erste Klemme (27) und die zweite Klemme (28) voneinander isoliert, wobei die zweite Klemme (28) des zweiten Inverters (21) mit dem Dämpfungsglied (20) mit negativ verlaufender Flanke verbunden ist und wobei die dritte Klemme (29) des zweiten Inverters (21) mit der zweiten Klemme (25) des ersten Inverters (19) verbunden ist; und
- ein Organ (22) zum Steuern des ersten Inverters (19) und des zweiten Inverters (21), das den ersten Inverter und den zweiten Inverter selektiv jeweils in seine erste Stellung und jeweils in seine zweite Stellung zu bringen vermag.

4. System nach Anspruch 3,
**dadurch gekennzeichnet, dass** das Organ (22) auch so ausgeführt ist, dass es den ersten Inverter (19) und den zweiten Inverter (21) jeweils die eine der ersten und zweiten Stellung bzw. die andere der ersten und zweiten Stellung einnehmen lässt.

5. System nach einem der Ansprüche 3 oder 4,
**dadurch gekennzeichnet, dass** das Konfigurationsorgan (22) einen Knopf (30) zur manuellen Betätigung aufweist.

6. System nach einem der Ansprüche 2 bis 5,
**dadurch gekennzeichnet, dass** das Dämpfungsglied (16) mit positiv verlaufender Flanke eine Verstärkung aufweist, bei der die Spanne zwischen ihrem Wert bei 47 MHz und ihrem Wert bei 862 MHz zwischen 21 und 23 dB liegt.

7. System nach Anspruch 6,
**dadurch gekennzeichnet, dass** das Dämpfungsglied (20) mit negativ verlaufender Flanke des Signalformers (18) eine Verstärkung aufweist, bei der die Spanne zwischen ihrem Wert bei 47 MHz und ihrem Wert bei 862 MHz zwischen 13 und 15 dB liegt.

8. System nach einem der Ansprüche 6 oder 7,
**dadurch gekennzeichnet, dass** die Verstärkung des Linearverstärkers (15) zwischen 17,4 und 19,4 dB liegt.

9. System nach einem der Ansprüche 2 bis 8,
**dadurch gekennzeichnet, dass** es mehrere zweite Anschlussklemmen (12A-12H) umfasst, wobei die Verstärkungseinheit (15, 16, 18) mit einem Signalformer (18) für jede der zweiten Klemme (12A-12H) versehen ist.

10. System nach Anspruch 9,
**dadurch gekennzeichnet, dass** es einen Verteiler (17) umfasst, der einen mit dem Ausgang des Dämpfungsglieds (16) mit positiv verlaufender Flanke verbundenen Eingang aufweist und der jeweils mit einem entsprechenden Signalformer (18) verbundene Ausgänge aufweist.

11. System nach einem der Ansprüche 1 bis 10,
**dadurch gekennzeichnet, dass** es mehrere zweite Anschlussklemmen (12A-12H) aufweist, wobei die Verstärkungseinheit (15, 16, 18) mit einem Auswahlorgan (22) für jede der zweiten Klemme (12A-12H) versehen ist.

12. System nach einem der Ansprüche 1 bis 11,
**dadurch gekennzeichnet, dass** jeder Signalformer (18) einen Signalwandler (23) von asymmetrischem Signal zu symmetrischem Signal aufweist.

13. Verfahren zur Verteilung von Fernsehsignalen,
**dadurch gekennzeichnet, dass** es die Schritte umfasst, über ein System nach einem der Ansprüche 1 bis 12 zu verfügen, einen Längenschwellenwert des verdrillten Adernpaars (13A-13H) zu bestimmen und den ersten Verlauf auszuwählen, wenn die Länge des verdrillten Adernpaars (13A-13H) kleiner als der Schwellenwert ist, und den zweiten Verlauf auszuwählen, wenn die Länge des verdrillten Adernpaars (13A-13H) größer als der Schwellenwert ist.

14. Verfahren nach Anspruch 13,
**dadurch gekennzeichnet, dass** der Schwellenwert zwischen 27 und 29 m liegt.

15. Verfahren nach einem der Ansprüche 13 oder 14,
**dadurch gekennzeichnet, dass** der Auswahlschritt die Auswahl des ersten Verlaufs umfasst, wenn die Länge des verdrillten Adernpaars (13A-13H) zwischen 5 m und dem Schwellenwert liegt, und die Auswahl des zweiten Verlaufs umfasst, wenn die Länge des verdrillten Adernpaars (13A-13H) zwischen dem Schwellenwert und 50 m liegt.
